Europäisches Patentamt

European Patent Office

Office européen des brevets

(19)

(11) Numéro de publication: **0 232 654 B1**

# (12) FASCICULE DE BREVET EUROPEEN

(45) Date de publication de fascicule du brevet:
17.07.91

(51) Int. Cl.⁵: **H01H 71/12**, H02H 1/00, H02H 3/04

(21) Numéro de dépôt: 86402907.9

(22) Date de dépôt: **22.12.86**

(54) Lecteur pour déclencheur numérique associé à un appareil de coupure de courant.

(30) Priorité: **03.01.86 FR 8600110**

(43) Date de publication de la demande:
**19.08.87 Bulletin 87/34**

(45) Mention de la délivrance du brevet:
**17.07.91 Bulletin 91/29**

(84) Etats contractants désignés:
**CH DE GB IT LI**

(56) Documents cités:
**FR-A- 2 531 239
US-A- 4 358 810
US-A- 4 429 340
US-A- 4 470 092**

(73) Titulaire: **MERLIN GERIN
Rue Henri Tarze
F-38050 Grenoble Cédex(FR)**

(72) Inventeur: **Mertz, Jean-Luc
MERLIN GERIN
F-38050 Grenoble cédex(FR)**
Inventeur: **Blain, Yves
MERLIN GERIN
F-38050 Grenoble cédex(FR)**

(74) Mandataire: **Kern, Paul
Merlin Gerin Sce. Brevets 20, rue Henri Tarze
F-38050 Grenoble Cédex(FR)**

## Description

La présente invention concerne un lecteur pour déclencheur numérique associé à un appareil de coupure de courant.

Dans le domaine des appareils de coupure de courant, par exemple des disjoncteurs pour des moteurs électriques, le développement des techniques numériques utilisant des microprocesseurs a entraîné la réalisation de déclencheurs permettant de déterminer avec précision les conditions de disjonction en tenant compte de nombreux paramètres, par exemple pour permettre des déclenchements en court retard, ou des déclenchements en long retard en correspondance avec des abaques complexes prédéterminés pour optimiser le fonctionnement du moteur et sa disjonction.

Ainsi, la demande des utilisateurs a entraîné l'apparition de déclencheurs présentant de très nombreuses possibilités et qui, en conséquence, exigent en pratique la présence d'un moyen d'affichage ou moyen de lecture pour indiquer les états des réglages effectués et les courants circulant dans l'alimentation du moteur, ces courants étant relevés au niveau du disjoncteur.

Un obstacle à la généralisation de tels déclencheurs élaborés réside dans leur coût relativement élevé. Ainsi, de tels déclencheurs sophistiqués sont en pratique limités à des associations avec des disjoncteurs de forte puissance associés à des moteurs de forte puisance, c'est-à-dire de coût élevé, pour lesquels il est rentable de prévoir un dispositif de protection (disjonction) suffisamment élaboré. Pour des moteurs de moyenne puissance, les utilisateurs hésitent à s'équiper de déclencheurs sophistiqués dont l'intérêt leur paraît insuffisant par rapport à l'investissement qu'ils représentent.

Un objet de la présente invention est de permettre l'utilisation de déclencheurs sophistiqués pour disjoncteurs, ces déclencheurs présentant les fonctions existant actuellement pour les applications en forte puissance mais étant réalisés de façon à ce que leur coût soit moins important.

L'idée de départ de la présente invention résulte d'une analyse des coûts des délencheurs numériques sophistiqués actuels. Avec la production en très grande série des miroprocesseurs et leur simplicité de programmation, ceux-ci ne constituent plus un facteur déterminant du coût d'un déclencheur numérique. Paradoxalement, une composante importante du coût du déclencheur réside dans le coût de l'afficheur alphanumérique.

Nénamoins, si cet afficheur est remplacé par un système de voyants ou éliminé, le déclencheur ne présente plus pour l'utilisateur un grand intérêt. En effet, pour bénéficier de tous les avantages d'un déclencheur sophistiqué, il convient de savoir exactement quels réglages on a effectué, et également de pouvoir détecter avec précision les courants circulant dans les lignes d'alimentation du disjoncteur en fonctionnement normal et au moment d'une disjonction.

Le document FR-A-2.531.239 divulgue un déclencheur à microprocesseur connecté par une voie de transmission bifilaire à un dispositif indicateur disposé à distance, dans un poste central. Le dispositif indicateur comporte un décodeur, constitué le cas échéant par un microprocesseur, ainsi que des indicateurs d'avertissement ou de déclenchement, par exemple constitués par des lampes ou des diodes lumineuses.

Ainsi, pour atteindre son objet, la présente invention prévoit de séparer les fonctions de lecteur et de déclencheur et d'organiser le déclencheur et un lecteur indépendant pour qu'ils soient associables de façon simple et rapide.

Pour atteindre cet objet, la présente invention prévoit un lecteur pour déclencheur statique numérique associé à un appareil de coupure de courant, dans lequel le déclencheur comporte des moyens d'introduction de paramètres de fonctionnement, des moyens de mesure du courant, un microprocesseur, couplé auxdits moyens, comportant des zones mémoires dans lesquelles sont introduits lesdits paramètres et des données de mesure de courant et émettant un ordre de déclenchement en cas de défaut, et des moyens de transmission au lecteur d'informations provenant du microprocesseur, le lecteur comportant des moyens de réception, un microprocesseur et des moyens d'affichage desdites informations, lecteur caractérisé en ce qu'il est du type portable, couplable temporairement, sans contact mécanique, avec le déclencheur, lesdits moyens d'affichage étant un moyen d'affichage alphanumérique, les moyens de réception du lecteur étant des moyens de réception de rayonnement infra-rouge couplés au microprocesseur du lecteur, les moyens de transmission du déclencheur comportant des moyens complémentaires d'émission du rayonnement infra-rouge couplés au microprocesseur du déclencheur, de manière à permettre le transfert dans les zones mémoires du microprocesseur du lecteur du contenu des zones mémoires du microprocesseur du déclencheur pour en permettre un affichage sélectif par le lecteur pendant ou après le couplage.

Ainsi, selon la présente invention, on réalise un lecteur indépendant du déclencheur qui peut être associé temporairement à un déclencheur et qui peut donc être utilisé séquentiellement en relation avec un grand nombre de déclencheurs, ce qui représente des intérêts pratiques notables, puisqu'un lecteur unique peut être utilisé par exemple par une société ou un service d'entretien pour vérifier un grand nombre de déclencheurs-disjoncteurs disposés à divers emplacements.

Ces objets, caractéristiques et avantages de la présente invention seront exposés plus en détail dans la description suivante d'un mode de réalisation particulier faite en relation avec les figures jointes parmi lesquelles :

la figure 1 représente un disjoncteur-déclencheur à commande numérique selon l'art antérieur ;

la figure 2 représente un disjoncteur-déclencheur associé à un lecteur selon la présente invention ;

la figure 3 est le schéma bloc du disjoncteur-déclencheur selon la figure 2 ;

la figure 4 est le schéma bloc du lecteur selon la figure 2 ; et

la figure 5 est l'organigramme de la fonction générale de déclenchement.

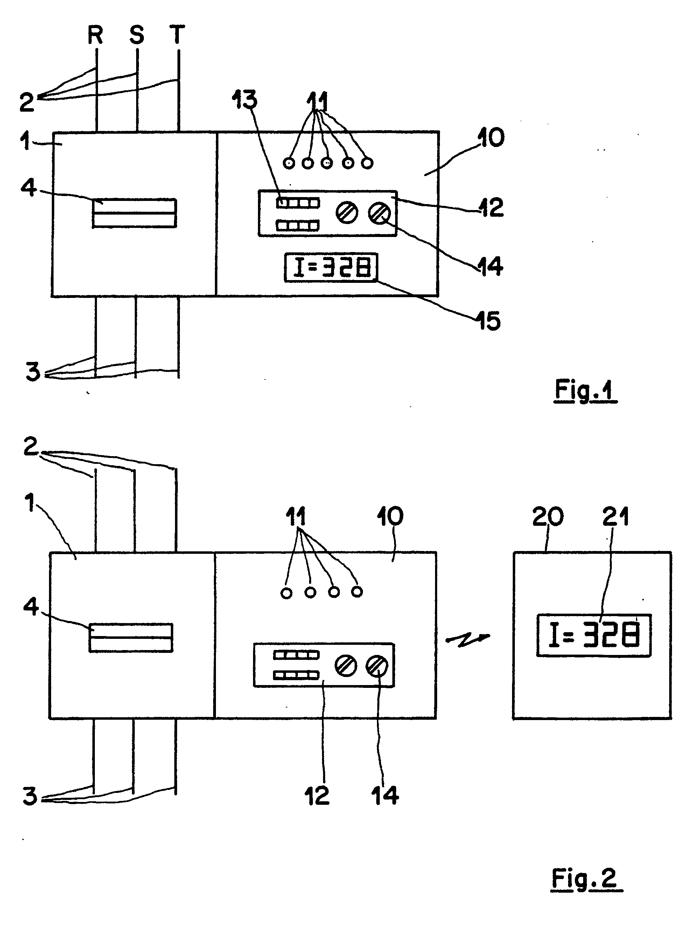

Sur la figure 1, un disjoncteur 1 à manette de commande 4 est inséré dans un circuit de distribution électrique à trois conducteurs de phase RST, d'entrée 2 et de sortie 3 du disjoncteur. Le mécanisme du disjoncteur est piloté par un déclencheur statique numérique 10 à microprocesseur, ce microprocesseur comprenant lui-même une unité centrale, une zone de mémoire vive, une zone de mémoire morte, et les autres ressources habituelles d'un microprocesseur. On a représenté sur la figure 1 seulement certains des moyens classiques d'accès au microprocesseur et de lecture des informations fournies par celui-ci. Le microprocesseur est sensible, d'une part, à ces moyens d'accès et, d'autre part, aux signaux provenant des capteurs associés au disjoncteur 1 ; et il permet de mémoriser les courants à un instant donné dans les conducteurs reliés au disjoncteur ainsi que les courants ayant apparu dans ces conducteurs au moment d'une disjonction et donc de déterminer la cause et le type de cette disjonction.

Ainsi, de façon typique, la face avant du déclencheur 10 comprend un ensemble de voyants 11 dont chacun est destiné à indiquer le mode de fonctionnement du disjoncteur (état fermé ou état ouvert) et, en cas d'ouverture du disjoncteur, la raison de la disjonction (par exemple, court retard, long retard, défaut de phase différentielle). Le déclencheur comprend également un afficheur alphanumérique 15 permettant de lire les indications mémorisées dans la mémoire vive du microprocesseur, c'est-à-dire, permettant par exemple d'indiquer les dernières valeurs de courant au moment d'une disjonction ou la valeur du courant actuel en cas de marche normale. Enfin, le panneau avant du déclencheur comprend un ensemble de moyens d'actionnement 12, tels que des commutateurs 13 ou des potentiomètres variables 14 permettant une programmation initiale du déclencheur. L'afficheur 15 permet également d'afficher les valeurs de réglage. Cet ensemble de moyens d'accès et de moyens de lecture ne sera pas décrit en détail ici car il appartient au domaine des connaissances de l'homme du métier.

La figure 2 représente un ensemble déclencheur-lecteur selon la présente invention. On y retrouve le disjoncteur 1 et le déclencheur 10 de la figure 1. Toutefois, on notera que le déclencheur 10 ne comprend plus de moyen d'affichage alphanumérique. En outre, ce déclencheur est modifié d'une façon qui sera exposée ci-après. Ce déclencheur est associable par tout moyen de couplage avec ou sans contact mécanique à un lecteur 20. Ce lecteur 20 comprend essentiellement sur sa face avant un dispositif d'affichage alphanumérique 21.

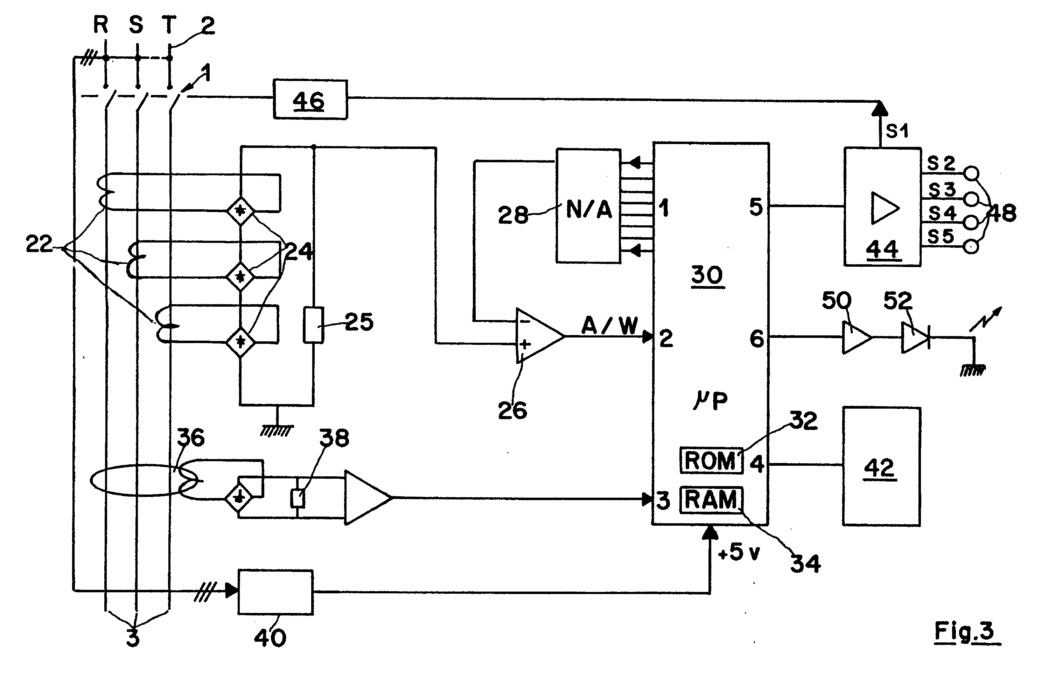

En se référant plus particulièrement à la figure 3, on voit qu'à chaque conducteur de phase 3 de sortie du disjoncteur 1 est associé un capteur 22 qui délivre un signal proportionnel au courant parcourant le conducteur associé, le signal étant appliqué à un pont redresseur à double alternance 24. Les sorties des trois ponts 24 sont connectées en série dans un circuit comprenant une résistance de mesure 25 pour faire apparaître aux bornes de la résistance un signal de tension proportionnel à la valeur maximale du courant. Le signal de tension est appliqué à l'une des entrées d'un comparateur 26, dont l'autre entrée reçoit un signal d'un convertisseur numérique-analogique 28 relié à un ensemble de sorties (8 par exemple) 1 d'un microprocesseur 30. La sortie du comparateur 26 est reliée à une entrée 2 du microprocesseur 30. Le microprocesseur 30 envoie par l'intermédiaire du convertisseur 28 sur l'entrée du comparateur 26 des valeurs successives auxquelles est comparé le signal représentatif du courant, appliqué sur l'autre entrée. Par détection de l'égalité des valeurs appliquées sur les entrées du comparateur 26 et par approches successives, le microprocesseur 30 détermine la valeur du courant de phase. Le convertisseur 28 peut être réalisé simplement par N résistances.

Le microprocesseur 30, par exemple le modèle 7508 de la société NEC, contient les ressources standard, tels que l'unité de traitement, les mémoires mortes ROM 32, les mémoires vives RAM 34, l'unité de calcul et les interfaces d'entrée-sortie.

A une entrée 3 du microprocesseur 30 est appliqué un signal de défaut différentiel, délivré par un transformateur différentiel 36 et traité dans un circuit à seuil 38. Un bloc d'alimentation 40, relié aux conducteurs de phase RST, alimente les circuits électroniques. Les paramètres de déclenchement sont fournis au microprocesseur 30 par programmation ou par un bloc de réglage 42 relié à une entrée 4. Un registre de sortie 44 est relié à une sortie 5 du microprocesseur 30 pour une transmission, sur une voie S1 d'un ordre de déclenchement à un relais 46 et sur quatre voies S2 - S5 de signalisations, à un bloc d'affichage à diodes électroluminescentes 48. Une sortie 6 du microprocesseur 30 alimente par l'intermédiaire d'un bloc de traitement 50 une diode photoémettrice 52 de télétransmission.

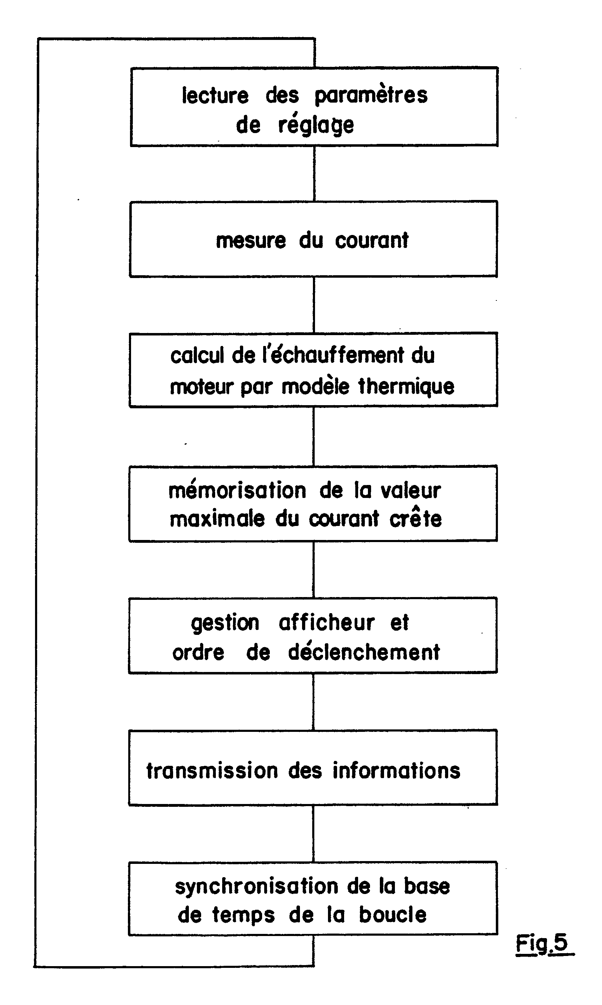

Le fonctionnement général du déclencheur statique ressort du programme illustré par la figure 5.

Le microprocesseur 30 acquiert les paramètres de réglage introduits par le bloc 42 et lit la valeur du courant de phase appliqué à l'entrée 2. Il calcule l'échauffement de l'appareil protégé, par exemple du moteur, par un modèle thermique et, par comparaison avec les seuils de réglage, notamment de déclenchement long retard et court retard, émet sur la sortie 5 un ordre de déclenchement transmis au relais 46 qui provoque l'ouverture des contacts du disjoncteur. La valeur maximale du courant crête est mémorisée. La sortie 5 transmet l'information aux diodes 48 qui indiquent le type de déclenchement réalisé. Cette information est également mémorisée dans la mémoire vive 34. Le cycle comprend la transmission d'information stockées dans les mémoires vive 34 et/ou morte 32 à un lecteur par l'emission de signaux infrarouge par la diode 52.

Lors d'un défaut différentiel transmis sur l'entrée 3 du microprocesseur, ce dernier engendre un ordre de déclenchement avec un affichage correspondant par les diodes 48.

Il est clair que le microprocesseur peut assurer d'autres fonctions et que les circuits de traitement peuvent être différents.

Le déclencheur 10 comprend des moyens de codage des signaux mémorisés dans sa mémoire vive 34 (ces moyens pouvant simplement être réalisés sous forme logicielle) et des moyens de transmission de ces signaux codés vers un moyen de réception compris dans le lecteur 20, ce moyen de réception étant lui-même associé à un décodeur relié à un microprocesseur prévu dans le lecteur 20. Selon un aspect de la présente invention, le lecteur 20 comprend le même microprocesseur que le déclencheur 10. Ainsi, il est possible de transférer simplement le contenu de la mémoire vive du microprocesseur du déclencheur dans la mémoire vive du microprocesseur du lecteur, ces deux microprocesseurs étant organisés de la même façon.

Ainsi, selon la présente invention, on transfère l'ensemble des données contenues dans la mémoire vive du premier microprocesseur (celui du déclencheur) vers le deuxième microprocesseur (celui de lecteur), pour permettre leur lecture sur l'afficheur du lecteur.

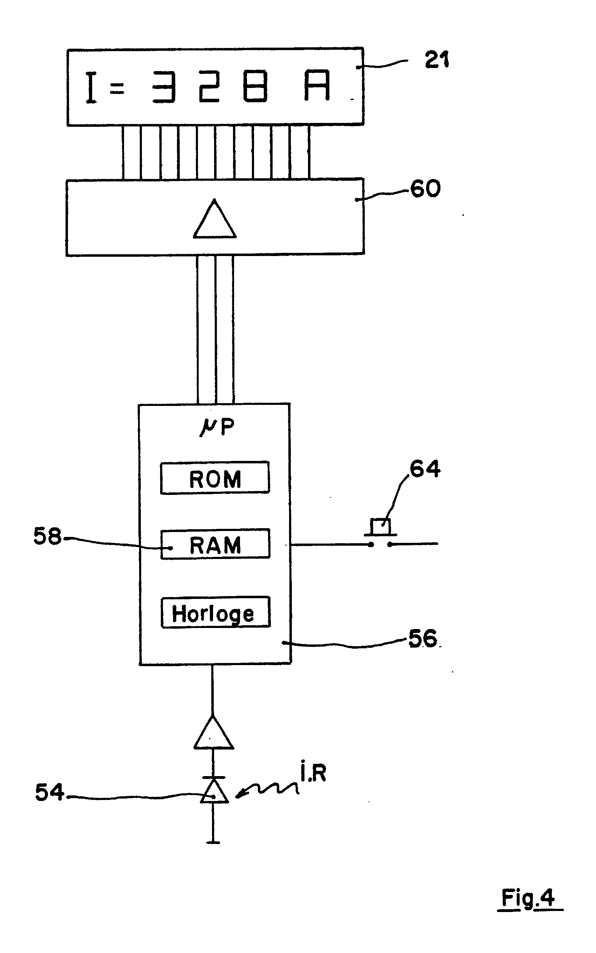

En se référant à la figure 4, on voit que le lecteur comprend une diode photoréceptrice 54 recevant le signal émis par la diode photoémettrice 52. Le signal reçu est amplifié et transmis à un microprocesseur 56, ayant une mémoire vive 58 de stockage des informations transmises. Une sortie du microprocesseur 56 est reliée par un registre 60 à un bloc d'affichage alphanumérique 21, par exemple à trois chiffres. Un signal de commande, notamment par bouton poussoir 64, est appliqué sur une entrée du microprocesseur 56 pour piloter le cycle d'affichage qui peut comporter l'affichage successif des valeurs de réglage, des courants maximum, des valeurs et des types de déclenchements et analogues.

Comme moyen de couplage entre le déclencheur et le lecteur, on peut choisir un ensemble d'une diode photoémettrice associée au déclencheur et d'une diode photoréceptrice associée au lecteur, ces diodes étant de préférence actives dans le domaine du spectre infra-rouge pour éviter que la diode photoréceptrice ne soit activée par des éclairages ambiants parasites.

Si l'on choisit comme microprocesseurs, pour le déclencheur et pour le lecteur, des microprocesseurs simples et peu coûteux, par exemple des microprocesseurs organisés en mots de 4 bits, chaque mot correspond à une valeur décimale comprise entre 0 et 15. Un mode de codage simple consiste à convertir le contenu de chaque case mémoire, c'est-à-dire de chaque mot, en une succession d'impulsions correspondant à la valeur décimale de ce mot, c'est-à-dire une suite d'un certain nombre d'impulsions compris par exemple entre 1 et 16. Cette succession d'impulsions pourra être envoyée au photoémetteur à un rythme relativement rapide, par exemple en choisissant des impulsions d'une largeur de 30 microsecondes espacées d'intervalles de 200 microsecondes. L'espace entre chaque train d'impulsions peut être de l'ordre de la centaine de millisecondes. Il est possible de prévoir que l'enregistrement ne pourra commencer dans le lecteur que quand celui-ci aura détecté une succession d'impulsions prédéterminées, par exemple une suite de plus de 16 impulsions. Un intérêt de prévoir des temps longs entre les trains d'impulsions est de permettre au microprocesseur du déclencheur de continuer à assurer les tâches qui lui sont dévolues pendant ces intervalles.

De tels moyens de codage et de décodage sont connus dans la technique.

Ainsi, on pourra utiliser le lecteur selon la présente invention pour procéder aux réglages initiaux du déclencheur, en lisant sur l'afficheur du lecteur les valeurs de consigne introduites au moyen des interrupteurs et autres moyens de commande de ce déclencheur. On pourra également, si des disjonctions se produisent de façon répétitive et inquiétante, utiliser le lecteur pour déterminer les conditions apparaissant au niveau du disjoncteur au moment de sa disjonction. De tels lecteurs peuvent être utilisés par des services d'entretien internes ou externes à l'entreprise utilisant par exemple de moteurs protégés par des ensembles disjoncteur-déclencheur.

Selon une variante de la présente invention, on prévoit au niveau du lecteur la possibilité de se coupler successivement à plusieurs déclencheurs commandant des appareils distincts pour enregistrer dans la mémoire les valeurs de consigne et les paramètres de fonctionnement de chacun des déclencheurs pour analyser ensuite en dehors des salles de machines les données recueillies.

## Revendications

1. Lecteur pour déclencheur statique numérique (10) associé à un appareil (1) de coupure de courant, dans lequel le déclencheur comporte des moyens (42) d'introduction de paramètres de fonctionnement, des moyens (22) de mesure du courant, un microprocesseur (30), couplé auxdits moyens, comportant des zones mémoires (32,34) dans lesquelles sont introduits lesdits paramètres et des données de mesure de courant et émettant un ordre de déclenchement en cas de défaut, et des moyens de transmission au lecteur d'informations provenant du microprocesseur, le lecteur (20) comportant des moyens (54) de réception, un microprocesseur (56) et des moyens (21) d'affichage desdites informations, lecteur caractérisé en ce qu'il est du type portable, couplable temporairement, sans contact mécanique, avec le déclencheur (10), lesdits moyens d'affichage (21) étant un moyen d'affichage alphanumérique, les moyens de réception du lecteur étant des moyens (54) de réception de rayonnement infra-rouge couplés au microprocesseur (56) du lecteur, les moyens de transmission du déclencheur comportant des moyens (52) complémentaires d'émission du rayonnement infra-rouge couplés au microprocesseur (30) du déclencheur, de manière à permettre le transfert dans les zones mémoires (58) du microprocesseur du lecteur du contenu des zones mémoires (32,34) du microprocesseur du déclencheur pour en permettre un affichage sélectif par le lecteur pendant ou après le couplage.

2. Lecteur selon la revendication 1, caractérisé en ce que les microprocesseurs (30,56) du déclencheur et du lecteur sont identiques.

3. Lecteur selon l'une des revendications 1 et 2, caractérisé en ce qu'il est susceptible d'être couplé sélectivement à des déclencheurs distincts.

4. Lecteur selon l'une quelconque des revendications 1 à 3, caractérisé en ce qu'il comporte une alimentation autonome.

## Claims

1. A reader for a digital trip device (10) associated with a current breaking device (1) in which the trip device comprises means (42) of entering operating parameters and current measuring means (22), a microprocessor (30) coupled to said means, comprising memory areas (32, 34) in which said parameters and current measurement data are entered emitting a tripping order when a fault occurs, and transmission means to the reader of informations provided by the microprocessor, the reader (20) comprising receiving means (54), a microprocessor (56) and display means (21) of said informations, reader, characterized in that the reader is of the portable type able to be coupled temporarily, without mechanical contact with the trip device (10), said receiving means (21) being an alphanumerical display means, the receiving means of the reader being infrared radiation receiving means (54) coupled to the microprocessor (56) of the reader, the transmission means of the trip device comprising complementary infra-red radiation emitting means (52) coupled to the microprocessor (30) of the trip device, in order to allow the transfer of the content of the memory areas (32, 34) of the microprocessor of the trip device to the memory areas (58) of the microprocessor of the reader, so as to allow a selective display by the reader during or after coupling.

2. Reader according to claim 1, characterized in that the microprocessors (30, 56) of the trip device and of the reader are identical.

3. Reader according to one of claims 1 and 2, characterized in that it can be coupled selectively to different trip devices.

4. Reader according to any one of claims 1 to 3, characterized in that it comprises an autonomous power supply.

## Patentansprüche

1. Leser für einen statischen, digitalen Auslöser (10) in einem Schutzschalter (1), in dem der Auslöser Mittel (42) aufweist für die Eingabe von Betriebs-Parametern, sowie Strom-Messmittel (22), einen mit den genannten Mitteln verbundenen Mikroprozessor (30), der Speicherzonen (32, 34) aufweist, in welche die genannten Parameter und Strommessdaten eingegeben werden, und die bei Fehlerauftritt einen Auslösebefehl aussenden, und Mittel zur Uebertragung an den Leser der vom Mikroprozessor kommenden Informationen, wobei der Leser (20) Empfangsmittel (54) aufweist, einen Mikroprozessor (56) und Anzeigemittel (21) der genannten Informationen, Leser, dadurch gekennzeichnet, dass er von tragbarer Art ist, zeitweise ohne mechanischen Kontakt mit dem Auslöser (10) kuppelbar, wobei die genannten Anzeigemittel (21) alphanumerische Anzeigemittel und die Empfangsmittel des Lesers infrarote Strahlungs-Empfangsmittel (54) sind, die mit dem Mikroprozessor (56) des Lesers verbunden sind, und wobei die Uebertragungsmittel des Auslösers zusätzliche Emissionsmittel (52) infraroter Strahlung aufweisen, die mit dem Mikroprozessor (30) des Auslösers verbunden sind, um die Uebertragung des Inhalts der Mikroprozessor-Speicherzonen (32, 34) des Lesers in die Mikroprozessor-Speicherzonen (58) des Auslösers zu ermöglichen, um dessen selektive Anzeige durch den Leser während oder nach der Verbindung zu erlauben.

2. Leser gemäss Anspruch 1, dadurch gekennzeichnet, dass die Mikroprozessoren (30, 56) des Auslösers und des Lesers identisch sind.

3. Leser gemäss einem der Ansprüche 1 und 2, dadurch gekennzeichnet, dass er wahlweise mit verschiedenen Auslösern verbunden werden kann.

4. Leser gemäss einem der Ansprüche 1 bis 3, dadurch gekennzeichnet, dass er eine autonome Versorgung aufweist.

R  S  T

2

13  11

1

10

4

12

14

I=328

15

**Fig.1**

3

2

11  10

1

20  21

4

12  14

I=328

3

12  14

**Fig.2**

Fig.3

EP 0 232 654 B1

**Fig.4**

lecture des paramètres
de réglage

mesure du courant

calcul de l'échauffement du
moteur par modèle thermique

mémorisation de la valeur
maximale du courant crête

gestion afficheur et
ordre de déclenchement

transmission des informations

synchronisation de la base
de temps de la boucle

**Fig.5**